# EUROPÄISCHE PATENTSCHRIFT

(11) **EP 1 042 151 B1**
(45) Veröffentlichungstag und Bekanntmachung des Hinweises auf die Patenterteilung: **12.10.2005**
(21) Anmeldenummer: 99944290.8
(22) Anmeldetag: 23.07.1999
(51) Int. Cl.: B60T 17/02

(54) **ELEKTRONISCHE DRUCKLUFTAUFBEREITUNGSANLAGE**
ELECTRONIC COMPRESSED-AIR PROCESSING SYSTEM
INSTALLATION ELECTRONIQUE DE TRAITEMENT D'AIR COMPRIME

(30) Priorität: 06.08.1998 DE 19835638
(43) Veröffentlichungstag der Anmeldung: 11.10.2000
(73) Patentinhaber: KNORR-BREMSE SYSTEME FÜR NUTZFAHRZEUGE GMBH, 80809 München (DE)
(72) Erfinder: HILBERER, Eduard, D-68766 Hockenheim (DE)
(86) Internationale Anmeldenummer: PCT/EP1999/005266
(87) Internationale Veröffentlichungsnummer: WO 2000/007863

(56) Entgegenhaltungen:
- EP-A- 0 689 117
- WO-A-98/47751
- DE-A- 19 515 895
- DE-C- 19 649 498

## Beschreibung

Die Erfindung betrifft eine Druckluftaufbereitungsanlage nach dem Oberbegriff des Anspruchs 1, umfassend in einem Gehäuse einen elektromechanischen Druckregler, vorzugsweise eine Lufttrockerpatrone, und ein Mehrkreisschutzventil mit wenigstens einem daran angeschlossenen Verbraucherkreis, wobei jeder Verbraucherkreis durch eine zugeordnete Drucksteuereinheit separat verriegelbar ist.

Druckluftaufbereitungsanlagen bekannter Bauart nutzen die von einem Luftpresser bereitgestellte Druckluft für den Betrieb pneumatischer Betriebsbremsen, von Feststellbremsanlagen, von anderen druckluftbetriebenen Verbrauchern sowie in jüngerer Zeit auch von Luftdruckfederungen, insbesondere bei Nutzfahrzeugen. Elektronisch gesteuerte Druckluftaufbereitungsanlagen sollen schnell betätigbare Magnetventile gemäß voreinstellbarer Parameter steuern. Aufgrund der Anfälligkeit der Elektronik und der mit dem Ausfall verbundenen mangelnden Verfügbarkeit des Kraftfahrzeugs ist es wünschenswert, daß die Druckluftaufbereitungsanlage auch dann funktioniert, wenn die Elektronik versagt.

DE-OS 195 15 895 A1 zeigt eine Druckluftbeschaffungsanlage, die eine Druckluftaufbereitungsanlage aufweist, die von einem Kompressor zugeführte Druckluft über einen Lufttrockner einem Vierkreisschutzventil zuführt, wobei die Ventilglieder des Vierkreisschutzventils über zugeordnete Vorsteuerventile ansteuerbar sind. Die Vorsteuerventile in einer Druckreglereinheit werden von einer zentralen Elektronikeinheit angesteuert, die auf den von einem Drucksensor in einem Betriebsbremskreis erfaßten Druck reagiert. Die Druckluft für die Druckreglereinheit und die pneumatische Ansteuerung der Ventilglieder des Vierkreisschutzventils wird wahlweise dem Betriebsbremskreis oder der Förderleitung hinter dem Lufttrockner entnommen. Im Falle des Ausfalls des Betriebsbremskreises müssen die Ventilglieder mit Steuerdruck ausschließlich aus der Förderleitung des Druckreglers versorgt werden, wodurch ein permanenter Lastlauf des Kompressors erforderlich wird und ein Kompressorschaden wesentlich schneller zustande kommen kann, weil der Kompressor permanent gegen den Sicherheitsventildruck fördern muß und somit zu überhitzen droht. Eine weitere Unzulänglichkeit der bekannten Anordnung besteht darin, daß im Falle der permanenten Förderung die Lufttrocknerpatrone nicht drucklos wird und somit nicht mehr regeneriert wird, wodurch nach Verstreichen einer bestimmten Zeit Feuchtigkeit in die Bremskreise eindringen kann. Schließlich wird der Lufttrockner auch nicht gesteuert in Abhängigkeit der erfaßten Luftfeuchte regeneriert, sondern bei jedem elektronisch ausgelösten Druckausgleich zwischen zwei Bremskreisen tritt Luft permanent über einen fest eingebauten Bypass aus, wodurch das zu fördernde Volumen und der entsprechende Energieverbrauch erhöht werden.

EP-OS 0 830 997 A2 beschreibt eine Energieversorgungseinrichtung für eine Druckluftbremseinrichtung von Fahrzeugen, bei der die jeweils einem Bremskreis zugeordneten Drucksteuereinheiten über Vorsteuerventile, die von einem elektrischen Steuergerät ansteuerbar sind, geschaltet werden, wobei eine kaskadenartige Voreinstellung des Schließdrucks der Drucksteuereinheiten ein sukzessives Befüllen der Bremskreise im stromlosen Betrieb in der Kaskadenreihenfolge zuläßt. Auch bei dieser Druckluftbremseinrichtung droht im stromlosen Betrieb ein Kompressorschaden, und ist eine Regeneration eine Lufttrocknerpatrone nicht vorgesehen. Der Zugang zum Bremskreis der Federbremsanlage erfolgt über ein Absperrschaltventil erst, wenn in den Betriebsbremskreisen ein Mindestdruck aufgebaut wurde. Diese Absperrschaltventil erlaubt keine Regelung oder Steuerung des Drucks.

DE-PS 195 44 621 C1 zeigt eine Druckluftbeschaffungsanlage mit einer Druckluftaufbereitungsanlage, die einen Lufttrockner, einen Druckregler und ein Mehrkreisschutzventil mit angeschlossenen Verbraucherkreisen mit diese absperrenden elektronisch steuerbaren Überströmventilen aufweist. Da die Luftfederung von demselben Anströmraum ausgeht, von dem auch die Verbrauchskreise ausgehen, ist es nicht möglich, die Luftfederung mit einem höheren Druck zu versorgen als die Bremskreise. Ferner ist es nicht möglich, im stromlosen Betrieb die Druckreglervorsteuerung weiter zu betreiben. Auch ist es im stromlosen Betrieb nicht möglich, die Lufttrocknerpatrone zu regenerieren. Ferner ist festzustellen, daß für die Absperrung der Überströmventile ein längerer Zeitraum vergeht, da ein großes Schaltvolumen benötigt wird. Hierdurch entfällt die Möglichkeit zum feinfühligen Belüften in den Kreisen mit fehlendem Vorratsbehälter (in der Praxis z. B. der Kreis für die Feststellbremsanlage), wodurch es zu Übersteuerungen kommen kann.

Es ist die Aufgabe der Erfindung, eine Druckluftaufbereitungsanlage nach dem Oberbegriff des Anspruchs 1 zu schaffen, die sich zuverlässig und kostengünstig betreiben läßt.

Diese Aufgabe wird erfindungsgemäß mit den kennzeichnenden Merkmalen des Anspruchs 1 dadurch gelöst, daß zwischen wenigstens einer der Drucksteuereinheiten und dem Druckreglerausgang ein Druckbegrenzer angeordnet ist, und daß der Druckbegrenzer im stromlosen Zustand eine Versorgungsbohrung für die wenigstens eine Drucksteuereinheit auf einen vorgegebenen Ausgangsdruck begrenzt.

Durch die erfindungsgemäße Druckluftaufbereitungsanlage ist es vorteilhaft möglich, mit unterschiedlichen Druckniveaus für die sicherheitsrelevante Bremsdruckversorgung und die Luftfederung zu operieren. Die verschiedenen Drücke sind im bestromten Betrieb der Druckluftaufbereitungsanlage frei programmierbar und können durch Betätigung bzw. Erregung entsprechend vorgesehener Magnetventile einzeln angesprochen werden. So ist es beispielsweise möglich, in Reaktion auf Druckmeßwerte in den Verbrauchskreisen auf Druckabnahmen hin gezielt einzelne Kreise in einer durch Prioritäten vorgebbaren Reihenfolge zu befüllen. Hierdurch kann gezielt auch das Befüllen jeweils nur eines Kreises vorgesehen werden, der dann entsprechend schneller auf einen Soll-Druckwert gebracht wird. Hierdurch wird eine vollelektronische Steuerung der Druckluftaufbereitungsanlage gewährleistet, die darüber hinaus in Reaktion auf andere Meßwerte, z.B. Schubphasen des Kraftfahrzeugs, Überlast des Kompressors oder Leckagen in einem bestimmten Kreis entsprechend einzelne Kreise abtrennen kann, um zu einem für den sicheren Betrieb des Kraftfahrzeugs notwendigen Zustand zurückzukehren. Ebenso kann die Steuerung in Reaktion auf erfaßte Feuchtewerte in der Druckluft und/oder in einer Luftentfeuchtungspatrone gezielt Zwischenregenerationen auslösen, indem in dem Bereich der Lufttrocknerpatrone gezielt eine Strömungsumkehr mit bereits getrockneter Luft ausgelöst wird, um die Patrone zu regenerieren.

Zweckmäßigerweise sind Steuerleitungen mit den die Regeneration auslösenden Ventilen derart verbunden, daß der Druckbegrenzer während des bestromten Betriebs stets geöffnet gehalten ist. Die jenseits des Druckbegrenzers angeordnete Versorgungsbohrung für die Kreise und die diesseits des Druckbegrenzers angeordnete Druckreglerausgangsbohrung stehen dann unter demselben Druck, und die Steuerelektronik bestimmt durch Vorgabe der zu füllenden Kreise die Abgabe der Druckluft an die Kreise sowie die einzulegenden Zwischenregenerationen. Vorzugsweise werden die Zwischenregenerationen von der Steuerung sicherheitshalber auch nach Verstreichen bestimmter Zeitabstände ausgelöst.

Im unbestromten Zustand dagegen regelt der Druckbegrenzer nach Erreichen eines voreingestellten Drucks in der Versorgungsbohrung ab und trennt diese von der Druckreglerausgangsbohrung in der Weise einer Staustufe ab. Hierdurch ist es möglich, bei entsprechender Ausgestaltung eines Überströmventils einer Luftfederung, die in Verbindung mit dem Druckreglerausgangsrohr steht, zunächst einen den Abschaltdruck des Druckbegrenzers übersteigenden Druck in der Druckreglerausgangsbohrung vorzusehen und einen höheren Druck für das Ansprechen des Überströmventils der Luftfederung, wodurch sichergestellt ist, daß auch bei Ausfall der elektronischen Steuerung erst die sicherheitsrelevanten Kreise befüllt werden. Ferner ermöglicht dies die Ausgestaltung der Luftfederung ohne eigenen Luftvorratsbehälter, wodurch die Kosten für dieses Bauteil eingespart werden.

Die erfindungsgemäße Druckluftaufbereitungsanlage ermöglicht es ferner vorteilhaft, den Druckregler auch bei begrenztem Kreisdruck, der noch unterhalb des Abschaltdrucks liegt, zu steuern. Andererseits ist im unbetromten Fall durch das Ansprechen des Druckbegrenzers gewährleistet, daß nach Überschreiten des Abregeldrucks von vorzugsweise ca. 8,5 bar kein unendliches Fördern gegen den Sicherheitsventildruck erfolgt. Hierdurch wird ein Kompressor den Druckreglerabschaltdruck schneller erreichen und entsprechend außer Betrieb gesetzt werden können, wodurch die Lebensdauer dem Kompressors erhöht und der Energieverbrauch herabgesetzt wird.

Vorzugsweise ist ferner eine elektronische Schnellabschaltmöglichkeit des Kompressors vorgesehen, beispielsweise durch ein 3/2-Wege-Ventil, das im Fall der elektronisch ausgelösfen Regeneration belüftet wird (oder ggf. magnetisch erregt) und vorzugsweise ebenfalls im Falle der pneumatischen Entlüftung des Druckreglers belüftet wird.

Zweckmäßigerweise ist ein Druckreglermagnetventil für die Steuerung des Druckreglers vorgesehen. Dieses Druckreglermagnetventil ist vorzugsweise als 3/2-Wege-Ventil ausgebildet und belüftet, wenn es erregt wird, eine Steuerleitung, die einerseits den Druckregler derart belüftet, daß die von einem Luftpresser geförderte Druckluft entlüftet wird, und andererseits einen Kolben des Druckbegrenzers derart, daß dieser in Öffnungsstellung verharrt. Vorzugsweise wird im Zusammenhang mit der Entlüftung des Druckreglers auch ein pneumatisches 2/2-Wege-Ventil belüftet, das die Schnellabschaltung des die einströmende Druckluft fördernden Luftpressers auslöst. Eine Feder stellt das Druckreglermagnetventil nach dem Ende der Erregung zurück, und die belüftete Steuerleitung wird entlüftet und somit drucklos, so daß die kaskadeartig nachgeschalteten pneumatischen Ventile ebenfalls in ihre Ausgangslage zurückkehren können.

Ferner umfaßt die Druckluftaufbereitungsanlage vorteilhafterweise ein Regenerationsmagnetventil, das als 3/2-Wege-Ventil ausgebildet ist und durch Erregung einerseits eine Regenerationsströmung in Richtung auf eine Lufttrocknerpatrone der Druckluftaufbereitungsanlage auslöst und andererseits einen weiteren Kolben des Druckbegrenzers belüftet und diesen somit in Öffnungsstellung fixiert. Eine Feder stellt das Druckreglermagnetventil nach dem Ende der Erregung zurück, und die belüftete Steuerleitung wird entlüftet und somit drucklos. Es versteht sich, daß zweckmäßigerweise das Regenerationsmagnetventil mit dem Druckreglermagnetventil derart synchronisierbar ist, daß das Regenerationsmagnetventil nur dann erregt wird, wenn auch das Druckreglermagnetventil erregt ist, um die Druckluftumkehr in der Lufttrocknerpatrone zuzulassen. Dagegen kann das Druckreglermagnetventil auch ohne Notwendigkeit zur Regeneration von der Steuerelektronik angesteuert werden. Es ist möglich, die beiden vorbezeichneten Magnetventile auch in einem gemeinsamen Bauteil auszubilden, wobei dann nur noch ein Synchronbetrieb Druckreglerentlüftung/Regeneration möglich ist.

Vorzugsweise umfaßt die Druckluftaufbereitungsanlage ein Vorsteuerventil für die Steuerung des Druckreglers, das unabhängig von der Steuerelektronik anspricht. Als Schwellenwert für das Ansprechen des Vorsteuerventils ist zweckmäßigerweise ein Druck über eine vorzugsweise verstellbare Feder eingestellt, bei dem das als pneumatisches (mechanisches) 3/2-Wege-Ventil ausgebildete Steuerventil schaltet. Bei Überschreiten des voreingestellten Drucks belüftet das Vorsteuerventil über eine Steuerbohrung den Druckregler und regelt diesen durch Entlüften ab. Vorzugsweise steuert die Steuerleitung noch ein vorzugsweise als 2/2-Wege-Ventil ausgebildetes Regenerationsventil gegen dessen federbelasteter Rückstellkraft an, wodurch die Regeneration einer Lufttrocknerpatrone auslösbar ist. Gemäß einer bevorzugten Ausbildung ist das Regenerationsventil zugleich als Kolben für das Aufstoßen des Druckreglers ausgebildet, der endseitig durch die Steuerleitung belüftet und gleichzeitig geschaltet und verlagert wird, um so schnell und zuverlässig die Abregelung des Druckreglers und die Regeneration der Luftpatrone zu synchronisieren. Zweckmäßigerweise ist der Abschaltdruck des Vorsteuerventils höher eingestellt als die in der Steuerelektronik gespeicherten Abschaltwerte, so daß die pneumatische Abschaltung lediglich als Auffangposition (Backup) der Elektronischen Abschaltung wirkt und nicht mit jener unerwünscht interferiert.

Durch die vorstehend erläuterten Weiterbildungen der Erfindung ist es möglich, die erfindungsgemäße Druckluftaufbereitungsanlage vollelektronisch zu steuern und dennoch Betriebsbereitschaft für den Fall des Ausfalls der Elektronik sicherzustellen.

Weitere Merkmale und Vorteile der Erfindung ergeben sich aus der nachfolgenden Beschreibung und den Unteransprüchen.

Die Erfindung wird im folgenden anhand von Ausführungsbeispielen unter Bezugnahme auf die anliegenden Zeichnungen näher erläutert.
Fig. 1 zeigt eine schematisierte Schnittdarstellung einer erfindungsgemäßen Druckluftaufbereitungsanlage.
Fig. 2 zeigt ein Schaltbild der Druckluftaufbereitungsanlage aus Fig. 1.
Fig. 3 zeigt ein Schaltbild einer anderen erfindungsgemäßen Druckluftaufbereitungsanlage für ein luftgefedertes Fahrzeug.

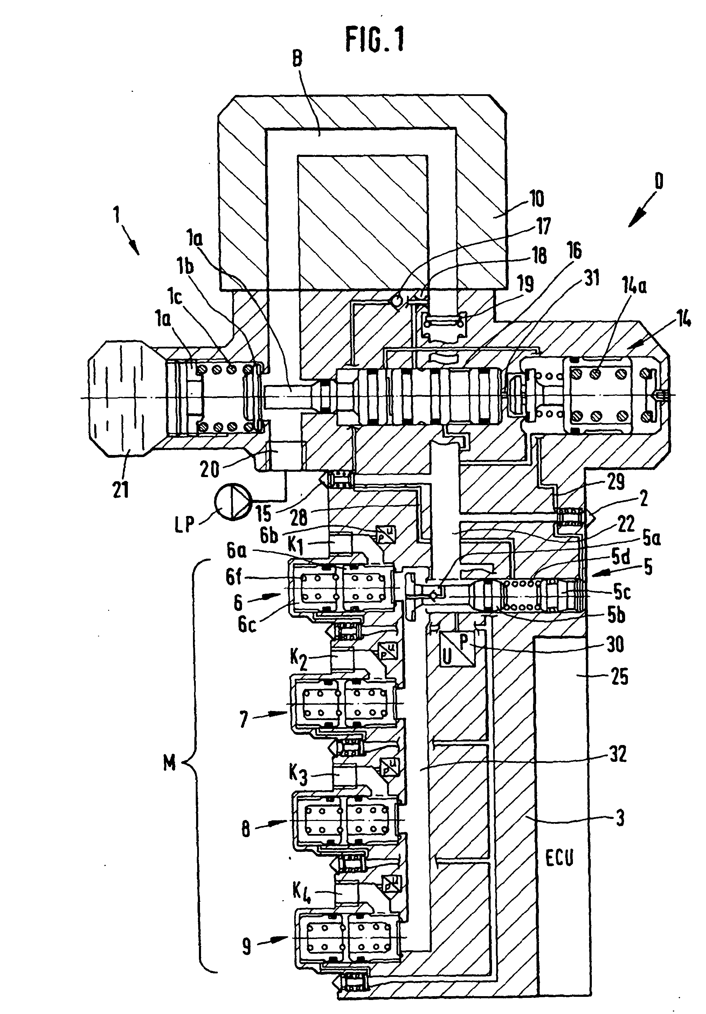

Das in Fig. 1 dargestellte Ausführungsbeispiel einer erfindungsgemäßen Druckluftaufbereitungsanlage D weist in einem gemeinsamen Gehäuse 3 Funktionselemente für den Betrieb z.B. an dem pneumatischen Bremssystem eines LKW auf. Die Druckluftaufbereitungsanlage D weist einen Füllanschluß 20 auf, an den eine nicht dargestellte Leitung für die Druckluftversorgung angeschlossen ist, die durch einen schematisch dargestellten Luftpresser LP, z. B. einem Kompressor, zugeführt wird. Eine Bohrung B führt den Füllanschluß 20 durch eine Lufttrocknerpatrone 10. Die Lufttrocknerpatrone 10 dient zum Entziehen der Feuchte der durch den Luftpresser LP zugeführten Luft.

Die in den Füllanschluß 20 eingeführte Druckluft passiert zunächst einen elektromechanischen Druckregler 1, der als Absperrventil des Füllanschlusses gegen einen Entlüftungsanschluß 21 fungiert. Der Druckregler 1 ist durch die Kraft einer Feder 1c, die sich auf einer zur Entlüftung offenen Scheibe 1d und gegen einen Kolben 1b, welcher die Begrenzung des Füllanschlusses 20 bildet, abstützt, in Schließstellung vorgespannt. Koaxial mit der Scheibe 1d ist ein Stößelglied oder Kolben 1a angeordnet, der zum mechanischen Aufstoßen des Kolbens 1b unter Überwindung der Rückstellkraft der Feder 1 c dient, was weiter unten noch näher erläutert werden wird.

Ein Rückschlagventil 19 verriegelt den Bereich des Füllanschlusses 20 gegen ein stromabwärts angeordnetes Druckreglerausgangsrohr 22, so daß bei Entlüftung des Füllanschlusses 20 kein Druckabfall im Druckreglerausgangsrohr 22 auftritt. Parallel zu dem Rückschlagventil 19 zweigt von dem Füllanschluß 20 eine Expansionsbohrung 18 ab, die für die Regeneration der Filterpatrone 10 den Durchtritt von Regenerationsluft, also trockener Luft, zuläßt. Die Expansionsbohrung 18 steht einerseits über eine Leitung mit einem Ausgang eines als pneumatisches Schließventil ausgebildeten und in Schließstellung vorgespannten Regenerationsventils 16 und andererseits mit einem Ausgang eines als elektromagnetisches 3/2-Wege-Ventils ausgebildeten und in Schließstellung vorgespannten Regenerationsmagnetventils 15 in Verbindung. Wird das Regenerationsmagnetventil 15 erregt, kann Druckluft aus dem Druckreglerausgangsrohr 22 das Rückschlagventil 17 passieren und durch die Expansionsbohrung 18 in die Filterpatrone 10 strömen (also entgegen der Strömungsrichtung der vom Luftpresser LP zugeführten Druckluft), wodurch das in der Filterpatrone 10 enthaltene Trocknungsmittel entfeuchtet und somit regeneriert wird.

An der Druckreglerausgangsbohrung 22 ist ein Drucksensor 30 angeordnet, der den Druck in der Druckreglerausgangsbohrung 22 mißt und an eine schematisch dargestellte Steuerelektronik 25 abgibt. Die Steuerelektronik 25 steuert ein als elektromagnetisches 3/2-Wege-Ventil ausgebildetes Druckreglermagnetventil 2 an, das eingangsseitig mit der Druckreglerausgangsbohrung 22 in Verbindung steht und im Betätigungsfalle Druckluft außerhalb der Druckluftaufbereitungsanlage abgibt. Das Druckreglermagnetventil 2 verbindet eine Steuerleitung 29 einerseits mit dem als Schalt/Sicherheitsventil ausgebildeten Druckregler 1 und andererseits mit einem Druckbegrenzer 5, der nachstehend noch näher erläutert wird.

An die Druckreglerausgangsbohrung 22 schließt der vorbezeichnete Druckbegrenzer 5 an. In dem vorliegendem Ausführungsbeispiel spannt eine Feder 5d, die sich auf einen Druckbegrenzersteuerkolben 5c einerseits und einen Druckbegrenzerkolben 5b andererseits abstützt, das Ventilglied des Druckbegrenzers 5 in Öffnungsrichtung vor. Der Druckbegrenzer 5 trennt strömungsmäßig eine nachgeordnete Versorgungsbohrung 32 von der Druckreglerausgangsbohrung 22 ab.

Die Versorgungsbohrung 32 wiederum beschickt ein Mehrkreisschutzventil M. Das Mehrkreisschutzventil M weist eine Mehrzahl von Drucksteuereinheiten 6, 7, 8, 9 auf, die im einzelnen noch beschrieben werden und die jeweils den Zugang von Druckluft aus der Versorgungsbohrung 32 zu einem zugeordneten Versorgungskreis K1, K2, K3 und K4 zulassen. Im vorliegenden Ausführungsbeispiel ist der Kreis K1 der Drucksteuereinheit 6 zugeordnet, der Kreis K2 der Drucksteuereinheit 7, der Kreis K3 der Drucksteuereinheit 8 und der Kreis K4 der Drucksteuereinheit 9 zugeordnet. Die Kreise K1 und K2 dienen der Druckluftversorgung von Betriebsbremskreisen, die nicht weiter dargestellt sind und z. B. Druckluftvorratsbehälter und andere übliche Bestandteile umfassen. An den Kreis K3 ist beispielsweise eine Feststellbremsanlage FBA angeschlossen, während der Kreis K4 zum Anschluß von Nebenverbrauchern vorgesehen ist.

Die Drucksteuereinheiten 6-9 sind jeweils nach demselben Konstruktionsprinzip aufgebaut, das daher beispielhaft anhand der Drucksteuereinheit 6 erläutert wird. Der Drucksteuereinheit 6 ist auf der Seite des Anschlußstutzens des Kreises K1 ein Drucksensor 6d zugeordnet, dessen Druckmeßwert der Steuerelektronik 25 zugeführt wird. Die Druckluft in der Versorgungsbohrung 32 wird durch ein Überströmventil 6a von dem Kreis K1 abgetrennt. Das Überströmventil 6a weist einen Schaltkolben 6e und eine Überströmventilfeder 6f.auf, die von einem Magnetventil 6c gesteuert be- bzw. entlüftet werden können. Im belüfteten Zustand ist die Überströmventilfeder 6f zusammengedrückt und die Versorgungsbohrung 32 steht in Verbindung mit dem Kreis K1. Das Magnetventil 6c muß zum Belüften der Überströmventilfeder 6f erregt werden und ist sonst zur Entlüftung des Schaltkolbens durch Federkraft voreingestellt. Die entsprechend den Teilen 6a - 6f bezeichneten Teile 7a - 7f , 8a - 8f und 9a - 9f sind konstruktiv und funktionell vergleichbar den beschriebenen Teilen 6a - 6f ausgebildet und daher zur Vermeidung von Wiederholungen nicht im einzelnen beschrieben. Da die Kreise K1 und K2 beides Betriebsbremskreise sind, die auf denselben Druckwert ausgelegt sind, ist es unter Einsparung eines Magnetventils 6c bzw. 7c möglich, für beide Überströmventile 6a bzw. 7a ein gemeinsames Magnetventil vorzusehen.

Sind die vorstehend erwähnten Druckreglermagnetventil 2 und Regenerationsmagnetventil 15 abgeschaltet, begrenzt der Druckbegrenzerkolben 5b den Druck in der zentralen Versorgungsbohrung 32, sobald ein Druck erreicht wird, der größer ist als der Wert, der durch die Feder 5d und den entlasteten Kolbendurchmesser vorgegeben ist.

Vorzugsweise konzentrisch zu dem Druckbegrenzer 5 ist ein Rückschlagventil 5a ausgebildet, das Druckluft aus der Versorgungsbohrung 32 in Richtung auf die Druckreglerausgangsbohrung 22 entströmen lassen kann und das entweder durch das Druckreglermagnetventil 2 oder durch das Regenerationsventil 15 bei entsprechender Beströmung vom Druckbegrenzen in Gegenrichtung abgehalten wird.

Das Stößelglied 1a wird durch die Betätigung eines als mechanisches 3/2-Wege-Ventil mit Flächenhysterese ausgebildetes Vorsteuerventil 14 verlagert. Das Vorsteuerventil 14 ist mittels einer einstellbaren Feder 14a in Entlüftungsstellung vorgespannt, in der das Stößelglied 1a dem Kolben 1b keine Öffnungsbewegung auferlegt. Erreicht der Druck in der Druckreglerausgangsbohrung 22 im stromlosen Betrieb der Anlage den durch die Feder 14a voreinstellbaren Wert, so wird die Feder 14a komprimiert und das Druckreglervorsteuerventil 14 belüftet über eine Bohrung 31 das Schaltventil 16, durch welches die Freigabe einer Backupregeneration ausgelöst wird, indem der Schaltkolben 1a entgegen der Vorspannung der Feder 1 c des Druckreglers 1 verschoben wird, so daß das Druckreglerventil 1 öffnet und der Luftpresser LP drucklos ins Freie fördern kann.

Es ist optional möglich, die Vorspannkraft der Feder 14a bei bestromten Betrieb zusätzlich durch den Weg eines Sperrkolbens zu erhöhen, der verhindert, daß das Ventil 14 bei Überschreiten der Kraft der Feder 14a anspricht. Der Sperrkolben kann zweikreisig aufgebaut sein und kann einerseits über eine Regenerationssperrleitung vom Regenerationsmagnetventil und andererseits über eine Vorsteuerleitung vom Kreissteuermagnetventil 6c, das oben bereits beschrieben wurde, beaufschlagt werden. Bei stromlosen Betrieb der Anlage D bleiben beide Leitungen 33, 34 drucklos und das Druckreglervorsteuerventil 14 kann frei, d. h. unbeeinflußt vom Hub des Sperrkolbens, arbeiten.

Im bestromten Betrieb der Anlage D wird bei Erreichen des Abschaltdruckes, welches durch den Drucksensor 30 in der Druckreglerausgangsbohrung 22 erfaßt wird, das Druckreglermagnetventil 2 durch die Steuerelektronik 25 angesteuert und erregt, wodurch die Leitung 29 den Schaltkolben 1a belüftet. Der belüftete Schaltkolben 1a drückt das Sicherheitsventil 21 auf, und der Luftpresser LP fördert ins Freie. Es ist ferner möglich, die elektrische Regeneration im bestromten Betrieb gleichfalls durch die gemeinsame Steuerelektronik 25 einzuleiten, indem das Regenerationsmagnetventil 15 erregt wird.

Die Ausgestaltung des Vorsteuerventils 14 ermöglicht also vorteilhaft eine Regeneration der Lufttrocknerpatrone 10 sowohl im bestromten wie im stromlosen Zustand, wodurch der Betrieb der Druckluftbeschaffungsanlage D sicher und kostengünstig gewährleistet ist.

An die Steuerelektronik 25 ist ein internes CAN (Controlled Area Network)-Netzwerk 24 angeschlossen, das über eine CAN-Datenbusleitung 24 an das dem Kraftfahrzeug zugehörige CAN-Netzwerk angeschlossen ist. Es ist somit möglich, von der Steuerelektronik 25 erfaßte Daten, z.B. Druckwerte im Betriebsbremskreis o.ä., an weitere Steuerelektroniken, die im Kraftfahrzeug installiert sind, zu übermitteln. Diese veranlassen ggf. die Betätigung von optischen Warnsignalen. Ferner kann die Steuerelektronik noch mit Temperaturmeßgliedern verbunden sein und eine Heizung 27 im Gehäuse 3 steuern.

Nachstehend wird die Funktionsweise der erfindungsgemäßen Druckluftaufbereitungsanlage D erläutert.

Nach Einschalten des Kraftfahrzeugs wird über den Füllanschluß 20 durch die Lufttrocknerpatrone 10 und das Rückschlagventil 19 sowie den Druckbegrenzer 5 Druckluft in die zentrale Versorgungsbohrung 32 gepreßt. Die Versorgungsbohrung 32 versorgt die Drucksteuereinheiten der Kreise K1 bis K4. Die Steuerelektronik 25 mißt über die Drucksensoren 6b-9b die Kreisdrücke in den Kreisen K1-K4. Durch gezieltes Erregen der entsprechenden Magnetventile 6c-9c kann die Steuerelektronik 25 die Kreise K1-K4 gezielt in einer gewünschten Reihenfolge bis zum Vorliegen eines programmierten Soll-Enddrucks füllen. Bei Auftreten einer Leckage in einem der Kreise kann ferner gezielt das dem Kreis zugehörige Magnetventil zum Verschließen des leckenden Kreises gegen die Versorgungsbohrung 32 erregt werden.

Wird während der Erstbefüllphase der Anlage aufgrund der gemessenen Luftfeuchte eine Regeneration der Lufttrocknerpatrone 10 erforderlich, veranlaßt die Steuerung 25 das Erregen des Druckreglermagnetventils 2. Es kommt somit zu einer Beaufschlagung der Steuerleitung 29 mit dem Druck der Druckreglerausgangsbohrung 22, wodurch der Kolben 1 a das Aufstoßen des Kolbens 1 b des Druckreglers 1 veranlaßt. Zugleich wird das Regenerationsmagnetventil 15 erregt, wodurch Druckluft aus der Druckreglerausgangsbohrung 22 über das Rückschlagventil 17 und die Expansionsbohrung 18 in die Lufttrocknerpatrone 10 gelangen kann und diese regeneriert (Zwischenregeneration). Das erregte Regenerationsmagnetventil 15 stößt ferner durch Beaufschlagung der Leitung 28 durch den Druckbegrenzersteuerkolben 5c den Druckbegrenzer 5 auf, und es bleibt während der Regeneration erregt. Nach Abschalten des Regenerationsmagnetventils 15 übernimmt das Druckreglermagnetventil 2 diese Aufgabe durch Beaufschlagen der Leitung 29 und des Druckbegrenzerkolben 5b. Somit ist gewährleistet. daß der Druckbegrenzer 5 bei elektrisch intakter Anlage ständig außer Kraft gesetzt bleibt, wodurch eine vollständige elektronische Steuerung (und Regelung) der Druckluftaufbereitungsanlage D ausgehend von der Steuerung 25 ermöglicht ist.

Im Falle des stromlosen Betriebs oder bei Ausfall der Steuerung erlaubt die erfindungsgemäße Anlage D dennoch einen sicheren Betrieb: Nach Einschalten des Kraftfahrzeugs wird über den Füllanschluß 20 durch die Lufttrocknerpatrone 10 und das Rückschlagventil 19 sowie den Druckbegrenzer 5 Druckluft in die zentrale Versorgungsbohrung 32 gefördert. Wird der Öffnungsdruck der Überströmventile 6-9 erreicht, öffnen diese (unabhängig von der dann fehlenden Erregung der Magnetventile 6c-9c) und die Kreise werden der Reihe nach belüftet. Die Steuerleitungen 28, 29 sind stets drucklos, so daß der Druckbegrenzer 5 frei arbeiten kann. Wird in der Versorgungsbohrung 32 ein voreingestellter Druckbegrenzerdruck von beispielsweise 8,5 bar erreicht, regelt der Druckbegrenzer 5 ab. Somit sind die Kreise K1-K4 auf diesen Druck begrenzt. Hierdurch ist es vorteilhaft möglich, eine von der Druckreglerausgangsbohrung 22 ausgehende Luftfederung ohne eigenen Vorratsbehälter auszubilden. Hierdurch kann durch die gewählte Einstellung der pneumatischen Ventile eine sichere Füllreihenfolge der Kreise K1 bis K4 ausgewählt sein. Der Druckbegrenzer 5 arbeitet in der Weise einer Vorstaustufe, die es ermöglicht, daß eine von der Druckreglerausgangsbohrung 22 ausgehende Luftfederung mit einem höheren Druck befüllt wird als die Betriebskreise K1-K4.

Der an der Feder des Druckreglervorsteuerventils 14 einstellbare Abschaltdruck des Druckregler 1 definiert denjenigen Druck in der Druckausgangsbohrung 22, bei dem die Leitung 31 belüftet wird und das Regenerationsventil 16 betätigt wird. Hierdurch strömt trockene Druckluft aus dem Druckausgangsrohr 22 durch das als 2/2-Wege-Ventil ausgebildete Ventil 16 und die Expansionsbohrung 18 zurück in die Lufttrocknerpatrone 10 und trocknet die Entfeuchtungsmittel aus. Durch die Betätigung des Kolbens 1 a wird zugleich der Druckregler 1 entlüftet. Die Verlagerung des Kolbens 1a erfolgt vorzugsweise dadurch, daß eine Kolbenfläche des konzentrisch angeordneten Ventils 16 endseitig beaufschlagt und somit verlagert wird, und der mit dem Ventil 16 mechanisch und/oder pneumatisch gekoppelte Kolben 1 a die Klappe 1 b gegen die Rückstellkraft der Feder 1c aufdrückt und den Anschluß 20 entlüftet. Diese Bauweise ist platzsparend und erfordert darüber hinaus nur kürzeste Fülldauern und gewährleistet somit hohe Ansprechgeschwindigkeiten.

Das Rückschlagventil 5a läßt vorteilhaft eine Umgehung des Ventils 5c zu, wenn bei abgeregeltem Druckbegrenzer 5 ein begrenztes Rückströmen der Versorgungsbohrung 32 bzw. der Drucksteuereinheiten 6 - 9 nicht möglich ist. Das Rückschlagventil 5a kann alternativ auch selektiv ansteuerbar ausgebildet sein, so daß es - z.B. vorzugsweise im bestromten Betrieb - außer Funktion gesetzt ist.

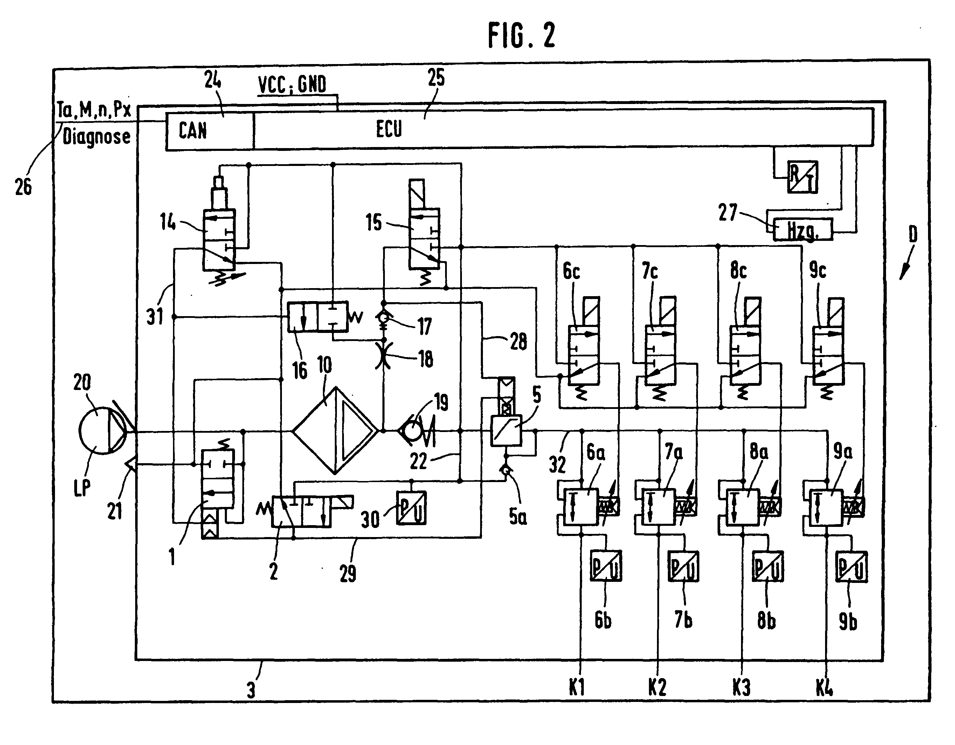

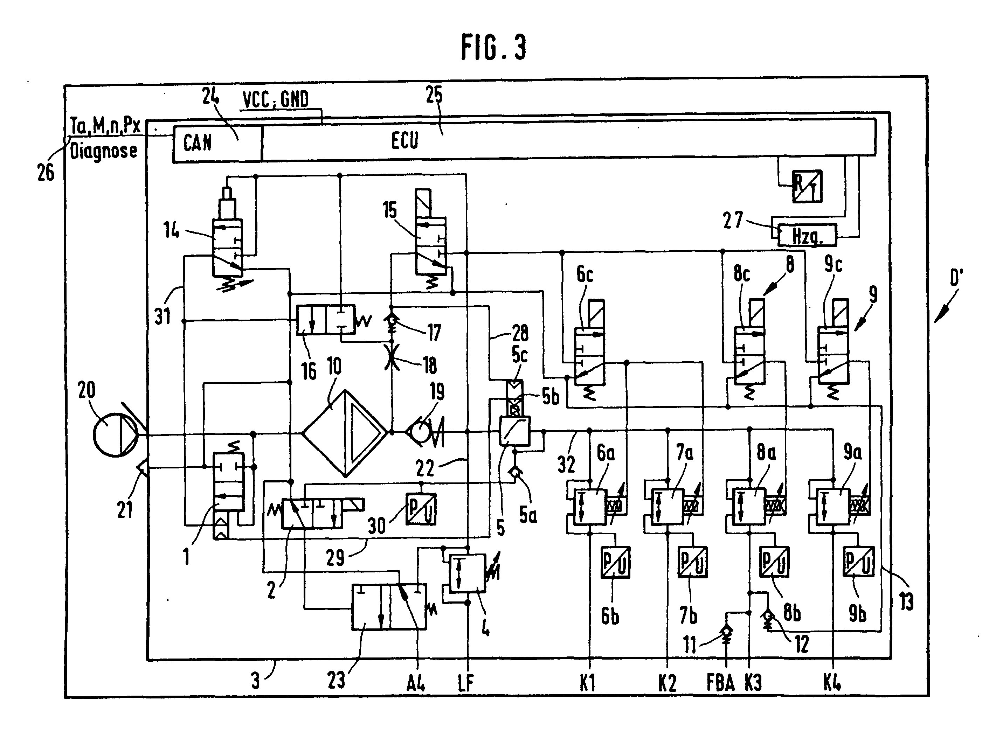

In Fig. 3 ist das Ausführungsbeispiel einer erfindungsgemäßen Druckluftaufbereitungsanlage D' dargestellt, das gegenüber Fig. 1 und 2 leicht abgewandelt ist, wobei dieselben Bezugszeichen wie in Fig. 1 und 2 dieselben Teile bezeichnen. Von der Ausgestaltung gemäß Fig. 1 und 2 verschiedene Bauteile und Funktionsweisen werden nachstehend kurz erläutert.

Anders als in der Druckluftaufbereitungseinrichtung D aus Fig. 1 und 2 führt bei der Druckluftaufbereitungseinrichtung D' die Leitung 29 ferner in den Steuerraum eines pneumatischen Schaltventils 23, das zur Steuerung eines Energiesparschaltkompressors LP vorgesehen ist, indem eine Steuerleitung A4 schnell be- bzw. entlüftet werden kann. Das Ventil 23 wird immer dann beströmt, wenn der Druckreglermagnetventil 2 zur Einleitung einer Regeneration erregt wird, so daß der Schaltkompressor, der sonst gegen die Entlüftung pumpen würde, abgeschaltet werden kann. Hierdurch wird Energie gespart und die Lebensdauer des Kompressors verlängert.

Ebenfalls an die Druckreglerausgangsbohrung 22 ist eine mit LF bezeichnete Luftfederung des LKW angeschlossen, die durch ein elektromagnetisches Überströmventil 4 verriegelbar ist. Die Steuerelektronik 25 kann beispielsweise vorsehen, daß das Überströmventil solange die Druckluftfederung LF von der Versorgung mit Druckluft aus dem Druckreglerausgangsrohr 22 absperrt, bis ein darin angeordnete Drucksensor 30 anzeigt, daß ein Druckwert erreicht wurde, der einem Mindestdruck der Versorgungskreise entspricht. Eine einstellbare Feder 4b spannt das Überströmventil in Schließrichtung vor. Die Schließkraft der Feder 4b wird bei Überschreitung des an der Feder eingestellten Mindestdruckwerts aufgehoben und die Luftfederung LF aus der Druckreglerausgangsbohrung 22 versorgt. Auf diese Weise ist sichergestellt, daß erst nachdem der Aufbau eines Mindestdrucks in der Druckreglerausgangsbohrung 22, durch die auch die Versorgungsbohrung 32 und die Nutzkreise K1 - K4 versorgt werden, abgeschlossen ist, Druckluft für die Luftfederung LF eingesetzt wird. Anschließend kann der Druck in der Druckreglerausgangsbohrung 22 weiter erhöht werden.

Ferner ist der Drucksteuereinheit 9 des Kreises K3 ein Sicherheitsventil 12 zur Überdrucksicherung angeordnet. Zwischen dem Anschluß von K3 und der Feststellbremsanlage FBA ist noch ein Rückschlagventil 11 angeordnet, um vorteilhafterweise bei Leitungsbruch im Kreis K3 eine Absicherung der Feststellbremsanlage FBA zu gewährleisten.

Schließlich werden die Drucksteuereinheiten 6 und 7 durch ein gemeinsames Magnetventil 6c gesteuert, wodurch ein Bauteil eingespart wird.

Die Erfindung ist vorstehend anhand eines Mehrkreisschutzventils M dargelegt worden, bei dem vier Kreise K1-K4 durch den Druckbegrenzer 5 vom Druckreglerausgangsrohr 22 abtrennbar waren. Hierdurch ist vorteilhaft eine vollelektronische Steuerung der Kreise ermöglicht, die bei Stromausfall o.ä. durch eine sicher funktionierende pneumatische Steuerung aufgefangen wird. Es ist aber auch möglich, die Druckluftaufbereitungsanlage derart auszubilden, daß aufgrund der Anordnung des Druckbegrenzers 5" die Drucksteuereinheiten 6, 7 und 8 (ebenso wie das Überströmventil 4 aus Fig. 3) direkt durch Druckluft aus dem Druckreglerausgangsrohr 22 beaufschlagt werden. Die Drucksteuereinheiten 6 und 7 können dann - anders als in Fig. 1 - als magnetische Überströmventile ausgebildet sein. In dieser modifizierten Einbauart erfolgt eine Druckbegrenzung durch den Druckbegrenzer, der vor dem Kreis K3 angeordnet ist, gegenüber dem Ausgangsrohr 22.

Es ist ferner vorteilhaft, wenn im Kreis K3 ein Entlüftungsventil für die Feststellbremsanlage FBA vorgesehen ist, durch welches bei Druckbehälteranschluß an Kreis K3 dieser ins Freie entlüftet werden kann. Hierdurch ist es möglich, die zur Feststellbremsanlage FBA führende Entlüftungsleitung jenseits des Entlüftungsventils abzusperren und erst dann mit Druck zu beaufschlagen, wenn in einem oder vorzugsweise in beiden Betriebsbremskreisen K1, K2 der Druck, der für die Restbremswirkung des Fahrzeugs zumindest erforderlich ist, überschritten wurde. Wird die Entlüftungsleitung abgesperrt, ist auch ein Füllen des Druckbehälters an Kreis K3 möglich und somit kann dann auch die Feststellbremsanlage FBA belüftet werden. Zur Steuerung des Entlüftungsventils führt eine Ventilsteuerleitung den Druck des Betriebsbremskreises K1 (oder optional des Betriebsbremskreises K2) als Steuerdruck dem Entlüftungsventil zu.

Soweit einzelne Merkmale der vorstehenden Ausführungsbeispiele und Varianten dargelegt wurden, versteht sich, daß sie ohne weiteres in geeigneter Weise mit den Merkmalen der anderen Ausführungsbeispiele und Varianten kombinierbar sind.

### Bezugszeichenliste

- 1: Druckregler
- 1 a: Kolben
- 1 b: Kolben
- 1 c: Feder
- 1 d: Scheibe
- 2: Druckreglermagnetventil
- 3: Gehäuse
- 5: Druckbegrenzer
- 5a: Rückschlagventil
- 5b: Druckbegrenzerkolben
- 5c: Druckbegrenzersteuerkolben
- 5d: Feder
- 6 - 9: Drucksteuereinheit
- 6a - 9a: Überströmventil
- 6c - 9c: Kreisvorsteuerventil
- 6d - 9d: Drucksensor
- 6e - 9e: Steuerkolben
- 6f - 9f: Überströmventilpaar
- 10: Luftttrocknerpatrone
- 11: Rückstellventil
- 12: Sicherheitsventil
- 14: Vorsteuerventil
- 14a: Feder
- 15: Regenerationsmagnetventil
- 16: Regenerationsventil
- 18: Expansionsbohrung
- 19: Rückschlagventil
- 20: Füllanschluß
- 22: Druckreglerausgang
- 24: CAN-Netzewerk
- 25: Steuerelektronik
- 27: Heizung
- 28, 29: Leitungen
- 30: Drucksensor
- 31: Bohrung
- 32: Versorgungsbohrung
- 33, 34: Leitungen

- A4: Steuerleitung
- B: Bohrung
- D: Druckluftbeschaffungsanlage
- FBA: Feststellbremsanlage
- K1 - K4: Verbraucherkreise
- LP: Luftpresser
- M: Mehrkreisschutzventil

## Patentansprüche

1. Druckluftaufbereitungsanlage, insbesondere für Kraftfahrzeuge, umfassend in einem Gehäuse (3) untergebracht
einen elektromechanischen Druckregler (1), und
ein Mehrkreisschutzventil (M) mit wenigstens einem daran angeschlossenen Verbraucherkreis (K1 - K4), wobei jeder Verbraucherkreis (K1 - K4) durch eine zugeordnete Drucksteuereinheit (6, 7, 8, 9) separat verriegelbar ist,
**dadurch gekennzeichnet,**
**daß** zwischen wenigstens einer der Drucksteuereinheiten (6 - 9) und dem Druckreglerausgang (22) ein Druckbegrenzer (5) angeordnet ist, und
**daß** der Druckbegrenzer (5) im stromlosen Zustand eine Versorgungsbohrung (32) für die wenigstens eine Drucksteuereinheit (6 - 9) auf einen vorgegebenen Ausgangsdruck begrenzt.

2. Druckluftaufbereitungsanlage nach Anspruch 1, **dadurch gekennzeichnet, daß** das Gehäuse (3) ferner ein Druckreglermagnetventil (2) für die Steuerung des Druckreglers (1) umfaßt.

3. Druckluftaufbereitungsanlage nach Anspruch 1 oder 2, **dadurch gekennzeichnet, daß** das Gehäuse (3) ferner ein Regenerationsmagnetventil (15) für die Steuerung des Druckreglers (1) umfaßt.

4. Druckluftaufbereitungsanlage nach Anspruch 2 und 3, **dadurch gekennzeichnet, daß** der Druckbegrenzer (5) zweikreisig ausgebildet ist und wechselseitig von dem Regenerationsmagnetventil (15) und dem Druckreglermagnetventil (2) in Öffnungsstellung gehalten wird.

5. Druckluftaufbereitungsanlage nach einem der Ansprüche 1 bis 4, **dadurch gekennzeichnet, daß** das Gehäuse (3) ferner ein Vorsteuerventil (14) für die Steuerung des Druckreglers (1) umfaßt.

6. Druckluftaufbereitungsanlage nach Anspruch 4 und 5, **dadurch gekennzeichnet, daß** der Druckregler (1) ein Schalt/Sicherheitsventil aufweist, das im elektrischen Betrieb mit einem Kolben (1a) aufgestoßen wird, welcher von dem Druckreglermagnetventil (2) belüftet wird, und daß im stromlosen Betrieb der Druckluftaufbereitungsanlage (D; D') das Schalt/Sicherheitsventil mit einem zweiten Kolben (16) aufgestoßen werden kann, welcher zweite Kolben (16) von dem Vorsteuerventil (14) belüftet wird.

7. Druckluftaufbereitungsanlage nach einem der Ansprüche 1 bis 6, **dadurch gekennzeichnet, daß** das Druckreglervorsteuerventil (14) des Druckreglers (1) wechselweise von dem Regenerationsmagnetventil (15) und dem Druckreglermagnetventil (2) oder einem Kreisvorsteuermagnetventil (6c-9c) durch Belüften eines zweikreisigen Sperrkolbens blockiert wird.

8. Druckluftaufbereitungsanlage nach einem der Ansprüche 1 bis 7, **dadurch gekennzeichnet, daß** das Gehäuse (3) ferner ein Regenerationsventil (16) für die Steuerung des Druckreglers (1) umfaßt.

9. Druckluftaufbereitungsanlage nach Anspruch 5 und 8, **dadurch gekennzeichnet, daß** der eingestellte Druck des Druckreglervorsteuerventils (14) gleich oder kleiner dem programmierbaren Abschaltdruck des Druckreglers (1) ist, und daß das Regenerationsventil (16) durch eine Bohrung (31) des Druckreglervorsteuerventils (14) be- bzw. entlüftet wird, um im stromlosen Betrieb der Anlage die Regeneration zu übernehmen.

10. Druckluftaufbereitungsanlage nach einem der Ansprüche 1 bis 9, **dadurch gekennzeichnet, daß** zu dem Druckbegrenzer (5) ein Rückschlagventil (5a) parallel derart angeordnet ist, daß das Rückschlagventil (5a) den Luftstrom in Richtung der Versorgungsbohrung (32) sperrt.

11. Druckluftaufbereitungsanlage nach einem der Ansprüche 1 bis 10, **dadurch gekennzeichnet, daß** das Mehrkreisschutzventil (M) mechanisch einstellbar ist.

12. Druckluftaufbereitungsanlage nach einem der Ansprüche 1 bis 11, **dadurch gekennzeichnet, daß** die mechanische Rückstellkraft der Drucksteuereinheiten (6-9) mit einem separaten Steuerkolben (6e-9e) absperrbar einstellbar ist.

13. Druckluftaufbereitungsanlage nach einem der Ansprüche 1 bis 12, **dadurch gekennzeichnet, daß** die Drucksteuereinheiten der beiden Betriebsbremskreise (K1, K2) von demselben Magnetventil (6c) schaltbar sind.

14. Druckluftaufbereitungsanlage nach einem der Ansprüche 1 bis 13, **dadurch gekennzeichnet, daß** eine Lufttrocknerpatrone (10) zwischen Druckregler (1) und Druckreglerausgangsbohrung (22) angeordnet ist.

15. Druckluftaufbereitungsanlage nach Anspruch 14, **dadurch gekennzeichnet, daß** ein Rückschlagventil (19) den Luftstrom im Druckreglerausgang (22) in Richtung der Lufttrocknerpatrone (10) sperrt.

16. Druckluftaufbereitungsanlage nach Anspruch 15, **dadurch gekennzeichnet, daß** parallel zu dem Rückschlagventil (19) eine Expansionsbohrung (18) für den Durchtritt von Regenerationsluft aus dem Druckreglerausgang (22) in Richtung der Lufttrocknerpatrone (10) vorgesehen ist.

17. Druckluftaufbereitungsanlage nach einem der Ansprüche 1 bis 16, **dadurch gekennzeichnet, daß** im Gehäuse ein Entlüftungsventil für eine Feststellbremsanlage vorgesehen ist, welche durch eine Ventilsteuerleitung vom Druck eines der Betriebsbremskreise derart ansteuerbar ist, daß die Luft in der Feststellbremsanlage zugeordneten Kreis solange in Freie entlüftet wird, bis der Druck in wenigstens einem der Betriebsbremskreise einen vorbestimmten Restbrems-Drucksollwert überschritten hat.

18. Verfahren zum Betrieb einer Druckluftaufbereitungsanlage (D; D') nach einem der Ansprüche 1 bis 17,
**dadurch gekennzeichnet,**
**daß** der Druckbegrenzer (5) im bestromten Zustand stets in Öffnungsstellung
gehalten ist, und
**daß** der Druckbegrenzer (5) im unbestromten Zustand nach erreichen eines voreingestellten Abschaltdrucks abregelt.

## Claims

1. Compressed-air processing system, in particular for motor vehicles, comprising
an electro-mechanical pressure governor (1) and
a multiple-circuit protective valve (M) including at least one load circuit (K1 - K4) connected to it, with each load circuit (K1 - K4) being adapted for separate locking by an associated pressure control unit (6, 7, 8, 9),
which are accommodated in a housing (3),
**characterised in**
**that** a pressure controller (5) is disposed between at least one of said pressure control units (6 - 9) and the pressure governor output (22), and
**that** in a current-less state, said pressure controller (5) limits a supply bore (32) for said at least one pressure control unit (6 - 9) to a predetermined output pressure level.

2. Compressed-air processing system according to Claim 1, **characterised in that** said housing (3) includes furthermore a pressure governor solenoid valve (2) for controlling said pressure governor (1).

3. Compressed-air processing system according to Claim 1 or 2, **characterised in that** said housing (3) comprises moreover a regeneration solenoid valve (15) for controlling said pressure governor (1).

4. Compressed-air processing system according to Claims 2 and 3, **characterised in that** said pressure controller (5) presents a dual-circuit configuration and is held, in alternation, by said regeneration solenoid valve (15) and said pressure governor solenoid valve (2) in an opening position.

5. Compressed-air processing system according to any of the Claims 1 to 4, **characterised in that** said housing (3) moreover comprises a pilot valve (14) for controlling said pressure governor (1).

6. Compressed-air processing system according to Claims 4 and 5, **characterised in that** said pressure governor (1) comprises a switching/safety valve that is pushed open by a piston (1a) in the electric mode, which piston is aerated by said pressure governor solenoid valve (2), and that in the current-less mode of said compressed-air processing system (D; D') said switching/safety valve may be pushed open by means of a second piston (16) that is aerated by said pilot valve (14).

7. Compressed-air processing system according to any of the Claims 1 to 6, **characterised in that** said pressure governor pilot valve (14) of said pressure governor (1) is blocked, in alternation, by said regeneration solenoid valve (15) and said pressure governor solenoid valve (2) or a circuit pilot solenoid valve (6c - 9c) by aeration of a dual-circuit locking piston.

8. Compressed-air processing system according to any of the Claims 1 to 7, **characterised in that** said housing (3) furthermore comprises a regeneration valve (16) for controlling said pressure governor (1).

9. Compressed-air processing system according to the Claims 5 and 8, **characterised in that** the set pressure of said pressure governor pilot valve (14) is equal to or lower than the programmable turn-off pressure of said pressure governor (1), and that said regeneration valve (16) is aerated or ventilated through a bore (31) of said pressure governor pilot valve (14) for assuming the regeneration function in the current-less mode of the system.

10. Compressed-air processing system according to any of the Claims 1 to 9, **characterised in that** a check valve (5a) is arranged in parallel with said pressure controller (5) in such a manner that said check valve (5a) blocks the air flow in a direction towards said supply bore (32).

11. Compressed-air processing system according to any of the Claims 1 to 10, **characterised in that** said multiple-circuit protective valve (M) is mechanically adjustable.

12. Compressed-air processing system according to any of the Claims 1 to 11, **characterised in that** the mechanical returning force of said pressure control units (6 - 9) is adjustable for being locked by a separate control piston (63 - 9e).

13. Compressed-air processing system according to any of the Claims 1 to 12, **characterised in that** said pressure control units of said two service brake circuits (K1, K2) are adapted for being switched by the same solenoid valve (6c).

14. Compressed-air processing system according to any of the Claims 1 to 13, **characterised in that** an air drier cartridge (10) is disposed between said pressure governor (1) and said pressure governor output bore (22).

15. Compressed-air processing system according to Claim 14, **characterised in that** a check valve blocks the air flow in said pressure governor output (22) in a direction towards said air drier cartridge (10).

16. Compressed-air processing system according to Claim 15, **characterised in that** an expansion bore (18) is provided in parallel with said check valve (19) for the passage of regeneration air from said pressure governor output (22) in a direction towards said air drier cartridge (10).

17. Compressed-air processing system according to any of the Claims 1 to 16, **characterised in that** an aeration valve is provided in said housing for a parking brake system, which is adapted to be controlled by the pressure of one of said service brake circuits through a valve control pipe in such a manner that the air in the circuit associated with said parking brake system is aerated into the open air until the pressure in at least one of said service brake circuits will have exceeded a predetermined residual rated braking pressure value.

18. Method for operating a compressed-air processing system (D; D') according to any of the Claims 1 to 17, **characterised in**
**that** said pressure controller (5) is permanently held in the opening position in the current-carrying state, and
**that** in the current-less state, said pressure controller (5) controls a shut-off action when a preset shut-off pressure has been reached.

## Revendications

1. Installation de préparation d'air comprimé, notamment pour des véhicules automobiles, comprenant, logés dans un boîtier (3)
un régulateur (1) électromécanique de pression, et
une vanne (M) de protection à plusieurs circuits ayant au moins un circuit (K1 à K4) d'utilisateur qui y est raccordé, chaque circuit (K1 à K4) d'utilisateur pouvant être fermé indépendamment par une unité (6, 7, 8, 9) associée de commande de la pression,
**caractérisée**
**en ce qu'**il est monté entre au moins l'une des unités (6 à 9) de commande de la pression et la sortie (22) du régulateur de la pression un limiteur (5) de pression et
**en ce que** le limiteur (5) de la pression limite à l'état sans courant électrique un trou (32) d'alimentation de la au moins une unité (6 à 9) de commande de la pression à une pression de sortie prescrite.

2. Installation de préparation d'air comprimé suivant la revendication 1, **caractérisée en ce que** le boîtier (3) comprend, en outre, une électrovanne (2) de régulateur de pression pour la commande du régulateur (1) de la pression.

3. Installation de préparation d'air comprimé suivant la revendication 1 ou 2, **caractérisé en ce que** le boîtier (3) comprend, en outre, une électrovanne (15) de régénération pour la commande du régulateur (1) de la pression.

4. Installation de préparation d'air comprimé suivant les revendications 2 et 3, **caractérisée en ce que** le limiteur (5) de la pression est constitué en deux circuits et est maintenu en position ouverte réciproquement par l'électrovanne (15) de régénération et par l'électrovanne (2) de régulateur de la pression.

5. Installation de préparation d'air comprimé suivant l'une des revendications 1 à 4, **caractérisée en ce que** le boîtier (3) comprend, en outre, une vanne (14) de commande pilote pour commander le régulateur (1) de la pression.

6. Installation de préparation d'air comprimé suivant les revendications 4 et 5, **caractérisée en ce que** le régulateur (1) de la pression comporte une vanne de commutation/sécurité qui, en fonctionnement électrique, est repoussée par un piston (1a), lequel est alimenté en air par l'électrovanne (2) du régulateur de la pression et **en ce que**, en fonctionnement sans courant électrique de l'installation (D, D') de préparation de l'air comprimé, la vanne de commutation/sécurité peut être repoussée par un deuxième piston (16), ce deuxième piston (16) étant alimenté en air par la vanne (14) de commande pilote.

7. Installation de préparation d'air comprimé suivant l'une des revendications 1 à 6, **caractérisée en ce que** la vanne (14) de commande pilote du régulateur (1) de la pression est bloquée en alternance par l'électrovanne (15) de régénération et par l'électrovanne (2) du régulateur de la pression ou par une électrovanne (6c à 9c) de commande pilote de circuit par l'alimentation en air d'un deuxième piston de blocage à deux circuits.

8. Installation de préparation d'air comprimé suivant l'une des revendications 1 à 7, **caractérisée en ce que** le boîtier (3) comprend, en outre, une vanne (16) de régénération pour la commande du régulateur (1) de la pression.

9. Installation de préparation d'air comprimé suivant les revendications 5 et 8, **caractérisée en ce que** la pression réglée de la vanne (14) pilote de commande du régulateur de la pression est inférieure ou égale à la pression d'interruption programmable du régulateur (1) de la pression et **en ce que** la vanne (16) de régénération peut être alimentée en air ou mise à l'atmosphère par un trou (31) de la vanne (14) pilote de commande du régulateur de la pression pour prendre en charge la régénération lorsque l'installation fonctionne sans courant électrique.

10. Installation de préparation d'air comprimé suivant l'une des revendications 1 à 9, **caractérisée en ce qu'**il est monté, en parallèle au limiteur (5) de la pression, un clapet (5a) antiretour, de sorte que le clapet (5a) antiretour empêche l'air de s'écouler dans la direction du trou (32) d'alimentation.

11. Installation de préparation d'air comprimé suivant l'une des revendications 1 à 10, **caractérisée en ce que** la vanne (M) de protection à plusieurs circuits est réglable mécaniquement.

12. Installation de préparation d'air comprimé suivant l'une des revendications 1 à 11, **caractérisée en ce que** la force de rappel mécanique des unités (6 à 9) de commande de la pression peut être réglée avec blocage par un piston (6e à 9e) de commande distinct.

13. Installation de préparation d'air comprimé suivant l'une des revendications 1 à 12, **caractérisée en ce que** les unités de commande de la pression des deux circuits de freinage (K1, K2) de service peuvent être commutées par la même électrovanne (6c).

14. Installation de préparation d'air comprimé suivant l'une des revendications 1 à 13, **caractérisée en ce qu'**une cartouche (10) de séchage de l'air est montée entre le régulateur (1) de la pression et le trou (22) de sortie du régulateur de la pression.

15. Installation de préparation d'air comprimé suivant la revendication 14, **caractérisée en ce qu'**un clapet (19) antiretour empêche l'air dans la sortie (22) du régulateur de la pression de s'écouler en direction de la cartouche (10) de séchage de l'air.

16. Installation de préparation d'air comprimé suivant la revendication 15, **caractérisée en ce qu'**il est prévu parallèlement au clapet (19) antiretour un trou (18) d'expansion pour le passage de l'air de régénération depuis la sortie (22) du régulateur de la pression dans la direction de la cartouche (10) de séchage de l'air.

17. Installation de préparation d'air comprimé suivant l'une des revendications 1 à 16, **caractérisée en ce qu'**il est prévu dans le boîtier une vanne de mise à l'atmosphère pour une installation de freinage de stationnement qui peut être commandée par un conduit de commande de vanne par la pression d'un circuit de freinage de service de façon à ce que l'air dans le circuit associé à l'installation de freinage de stationnement arrive à l'air libre jusqu'à ce que la pression ait dépassée une valeur de consigne de pression de freinage résiduelle prescrite dans au moins l'un des circuits de freinage de service.

18. Procédé pour faire fonctionner une installation (D, D') de préparation d'air comprimé suivant l'une des revendications 1 à 17, **caractérisé**
**en ce que** le limiteur (5) de la pression est maintenu toujours en position ouverte dans l'état dans lequel passe du courant électrique et
**en ce que** le limiteur (5) de la pression est à l'état sans courant électrique mis hors circuit après qu'une pression d'arrêt fixée à l'avance a été atteinte.
